# EUROPÄISCHE PATENTSCHRIFT

(11) **EP 0 495 506 B1**
(45) Veröffentlichungstag und Bekanntmachung des Hinweises auf die Patenterteilung: **25.10.1995**
(21) Anmeldenummer: 92100693.8
(22) Anmeldetag: 16.01.1992
(51) Int. Cl.: F23K 5/10, B01F 11/02

(54) **Anordnung zur Druckzerstäubung von flüssigem Brennstoff und Verfahren dafür**
Arrangement and method for mechanical atomization of liquid fuel
Agencement et procédé de pulvérisation mécanique du combustible liquide

(30) Priorität: 17.01.1991 DE 4101303
(43) Veröffentlichungstag der Anmeldung: 22.07.1992
(73) Patentinhaber: PPV-VERWALTUNGS-AG, 8032 Zürich (CH)
(72) Erfinder: Pöschl, Günter, W-7141 Steinheim/Murr (DE)
(74) Vertreter: Menges, Rolf, Dipl.-Ing.

(56) Entgegenhaltungen:
- WO-A-83/00446
- DE-A- 2 443 452
- DE-C- 856 342
- US-A- 1 917 577
- US-A- 3 977 604
- US-A- 4 227 817

## Beschreibung

### Technisches Gebiet

Die Erfindung betrifft eine Anordnung zur Erzeugung eines Brennstoffschaumes aus flüssigem Brennstoff an einer Rohrmündung vorzugsweise mit einer Zerstäuberdüse, die mit unter Druck stehendem Brennstoff beschickt wird, sowie ein diesbezügliches Verfahren.

### Stand dem Technik

Druckzerstäubung von flüssigen Brennstoffen ist aus der Heizungs- und Kraftfahrzeugtechnik bekannt. Der Wirkungsgrad der Verbrennung hängt neben anderen Parametern, wie der Tröpfchengröße des erzeugten Brennstoffnebels davon ab, daß für den Verbrennungsvorgang eine ausreichende Menge Sauerstoff zur Verfügung steht. Die Luftzuführung zur Flamme ist aber grundsätzlich durch den sich um die Flamme bildenden Stickstoffmantel begrenzt, der den Flammbereich gewissermaßen isoliert.

Aus der US-A-3 977 604 sind eine Zerstäuberdüse und ein Verfahren zur Ultraschall-Zerstäubung von flüssigem Brennstoff bekannt, die der Anordnung bzw. dem Verfahren nach den Ansprüchen 1 bzw. 18 ähnlich sind. Dabei wird ein scheibenförmiger Ultraschall-Schwinger zur Verbesserung der Zerstäubung und des Wirkungsgrades der Verbrennung eingesetzt. Der scheibenförmige Schwinger ist in einer Nebelkammer mit Abstand von deren Innenwand angeordnet. Die Nebelkammer hat unten einen Auslaß mit einem ringförmigen Ultraschall-Schwinger. Der dem scheibenförmigen Schwinger zentral zugeführte Brennstoff wird an dessen oberer Stirnfläche zerstäubt, so daß ein Brennstoffnebel erzeuge wird, der die Nebelkammer unten über den Auslaß und eine sich daran anschließende Hauptdüse verläßt.

Aus der WO-A-8 300 446 ist es bekannt, eine suspension von gas und flussigem Brennstoff durch Einleiten des Gases über Ultraschallpfeifen zu erzeugen.

Die Ausführungsform mit Ultraschall-Zerstäubung hat gegenüber der konventionellen Druckzerstäubung gewisse Vorteile. Der Brennstoffnebel zeichnet sich durch eine kleinere durchschnittliche Tröpfchengröße aus. Die Brennstoffzufuhr kann über eine mit Normaldruck arbeitande Dosierpumpe erfolgen, die wesentlich einfacher und kostengunstiger ist, als die bei einem Druckzerstäuber notwandige Hockdruckpumpe mit Druckregler. Schließlich kann über die Frequenz des Ultraschall-Schwingers die Tröpfchengröße als Funktion der Viskosität des Brennstoffs eingestellt werden (Sonderdruck aus Keramische Zeitschrift (29) Nr. 1/1977 "Flüssigkeitszerstäubung mit piezokeramischen Ultraschall-Schwingern").

Wie bei der normalen Druckzerstäubung ist auch der Wirkungsgrad der Verbrennung bei Einsatz von Ultraschall-Zerstäubern dadurch begrenzt, daß der Verbrennung, d. h. dem Flammkegel, nicht in ausreichender Menge Luft bzw. Sauerstoff zugeführt werden kann.

### Darstellung der Erfindung

Der Erfindung liegt die Aufgabe zugrunde, den Wirkungsgrad der Druckzerstäubung von flüssigem Brennstoff inbesondere mit einer Zerstäuberdüse zu steigern und insbesondere das Problem zu lösen, wie in den Flammkegel der Verbrennung mehr Luft oder Sauerstoff eingeführt werden kann.

Die Lösung dieser Aufgabe ist in den Patentansprüchen 1 und 18 angegeben und kann den Unteransprüchen gemäß vorteilhaft weitergebilet werden.

Erfindungsgemäß wird ein mit bestimmter Frequenz angeregtes Schwingelement, vorzugsweise ein piezoelektrischer oder magnetisch angeregter Ultraschall-Schwinger dazu verwendet, den flüssigen Brennstoff in eine Art Schaum zu transformieren. Die Funktion des Schwingers ist in diesem Zusamnenhang nicht die konventionelle Erzeugung von Tröpfchen in der Grenzschicht Flüssigkeit-Gas, sondern ein quasi entgegengesetzter Prozeß, bei welchem mikroskopische Luftvolumina in die Flüssigkeit hineingezogen werden. Inwieweit auch dieses Phänomen mit der Kapillarwellenhypothese erklärt werden kann, ist in vorliegendem Zusammenhang von minderer Bedeutung. Entscheidend ist, daß mit der erfindungsgemäßen Anordnung bzw. dem Verfahren eine Nukleierung der Luft im flüssigen Brennstoff erreicht werden kann. Die Konsistenz dieses Luft-Brennstoffgemisches kann am ehesten als schaumartig beschrieben werden.

Dieser Brennstoffschaum wird in konventioneller Weise unter Druck zu einer besonders ausgeformten Zerstäuberdüse gefördert und dort in konventioneller Weise zerstäubt und verbrannt. Durch die in Flammkegel selbst freigesetzte Luft wird der Wirkungsgrad der Verbrennung enorm gesteigert, es wurden im Flammkegel Temperaturen bis zu 2000°C gemessen. Infolge der hohen Temperaturen entsteht praktisch kein wasserdampf, die bei Kraftfahrzeugmotoren entstehenden schädlichen Stickoxide können zu über 80 % reduziert werden. Die erfindungsgemäße Anordnung bzw. das Verfahren eignet sich daher insbesondere für Dieselmotoren, deren Emissionswerte durch die Anwendung der Erfindung derart gesenkt werden, daß die Nachschaltung eines Katalysators entfallen kann. Da die von Flüssigkeit eingeschlossenen Gasbläschen unter Druck stehen, tritt ganz unabhängig von dem Entspannungseffekt in der Zerstäuberdüse eine Zerstäubung des flüssigen Brennstoffs bei Austritt in die Atmosphäre ein. Diese Zerstäubung beruht in erster Linie auf dem Innendruck der eingeschlossenen Gasbläschen. Dieser Effekt kann die Vorsehung einer speziellen Zerstäuberdüse überflüssig machen. Es reicht für bestimmte Anwendungsfälle, wenn der Schaum aus einer Rohrmündung ins Freie bzw. in den Brennraum eintritt.

Entscheidend für die Erfindung war die Erkenntnis, das Schwingelement bzw. den Ultraschall-Schwinger nicht für die eigentliche Zerstäubung einzusetzen, sondern in einem gänzlich neuen Zusammenhang, nämlich zur Erzeugung eines Brennstoffschaums, der den für die Verbrennung benötigten Sauerstoff mit sich trägt und direkt in den Flammraum transportiert. Die Anwendung piezokeramischer Ultraschall-Schwinger zur Flüssigkeitszerstäubung konnte somit keine Anregung für die Erfindung liefern.

Gemäß einer vorteilhaften Weiterbildung der Erfindung wird dem in einer Kammer freischwingenden, vorzugsweise piezokeramischen Element ein Amplitudentransformator nachgeschaltet. Dieser Amplitudentransformator ist beispielsweise ein hülsenförmiges Teil, das in einen rohrförmigen Ansatz des Kammergehäuses eingesetzt ist. In der Außenhülle der Hülse ist eine schraubenlinienförmige Nut eingeschnitten, durch welche das Luft-Brennstoffgemisch gefördert wird. Der Amplitudentransformator wird vom piezokeramischen Element zu einer Resonanzschwingung angeregt. Bei der Umströmung des Amplitudentransformators wird daher die eingeschlossene Luft noch feiner verteilt und der Schaum weiter homogenisiert.

Unter bestimmten Umständen kann der Amplitudentransformator entfallen und durch ein im Reaktionsraum angeordnetes mechanisches Kavitationselement ersetzt werden. Bei diesem Kavitationselement handelt es sich um eine schnell rotierende diskusförmige Scheibe, die mehrere axiale Bohrungen aufweist. Verursacht durch den Bernoullieffekt, tritt eine Durchströmung dieser Bohrungen und dabei eine Homogenisierung des Luft-/Brennstoffgemischs ein.

Es hat sich als vorteilhaft erwiesen, mit Sauerstoff angereicherte Luft zu verwenden. Die Sauerstoffanreicherung der Luft erfolgt dadurch, daß Umgebungsluft unter Druck über stickstoffabsorbierende Zeolithe geleitet wird.

Um eine Selbstentzündung des Sauerstoff-/Brennstoffgemischs im Reaktionsraum zu verhindern, wird in den Reaktionsraum noch Wasser eingeleitet. Der Anteil des Wassers liegt zwischen 30 und 50 Mol%, bezogen auf die Ölmenge.

Unter der Wirkung des mechanischen Kavitationselements und der Ultraschallenergie werden die Wassermoleküle in Radikale aufgespalten, der Wirkungsgrad der Verbrennung wird dadurch noch weiter gesteigert und die Abgaswerte weiter verbessert, es fallen praktisch nur Kohlendioxid und wasserdampf an.

Nachfolgend wird die Erfindung anhand der beigefügten Zeichnungen beispielsweise beschrieben. Es zeigen
- Fig. 1: einen schematischen Querschnitt durch eine der Zerstäuberdüse vorgeschaltete Anordnung zur Erzeugung eines Brennstoffschaumes und
- Fig. 2: den schematischen Querschnitt durch eine andere Ausführungsform einer Anordnung zur Erzeugung eines Brennstoffschaumes.

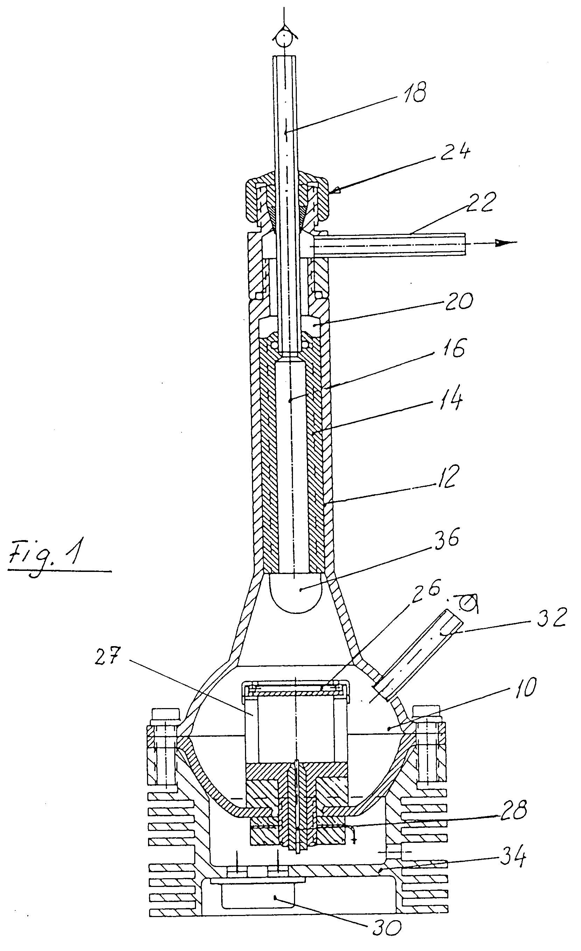

Bei der in Figur 1 gezeigten Ausführungsform ist eine Kammer 10 topfförmig ausgebildet und weist einen rohrförmigen Ansatz 12 auf. In den rohrförmigen Ansatz 12 ist ein hülsenförmiges Teil 14 eingesetzt. Das hülsenförmige Teil 14 hat eine Innenbohrung 16, die einerseits in die Kammer 10 mündet und die andererseits mit einer Zuführleitung 18 für Druckluft verbunden ist.

In den Außenmantel des hülsenförmigen Teils 14 sind Gewindegänge eingeschnitten, die im Zusammenwirken mit der Innenwandung des rohrförmigen Ansatzes 12 Kanäle bilden, die von Innenraum der Kammer 10 in eine Austragskammer 20 führen, die um oberen Ende des rohrförmigen Ansatzes 12 hinter dem hülsenförmigen Teil 14 angeordnet ist. Von dieser Austragskammer 20 führt eine Leitung 22 zur Zerstäuberdüse.

Die Zuführleitung 18 für die Druckluft ist durch die Austragskammer 20 dichtend hindurchgeführt, das Ende des rohrförmigen Ansatzes 12 ist gegenüber der Luftzuführleitung 18 mit einer Stopfbüchse 24 abgedichtet.

Die schraubenlinienförmigen Kanäle in der Außenwandung des hülsenförmigen Teils 14 sind wie bei einem mehrgängigen Gewinde angeordnet, ihre Steigung ist eine Funktion der Viskosität des flüssigen Brennstoffs und der Länge der Hülse 14. Bei einem Ausführungsbeispiel beträgt die Steigung 7 mm. Je niederviskoser der Brennstoff ist, desto mehr Gänge werden in die Außenhülle des hülsenförmigen Teils 14 eingeschnitten.

Der Amplitudentransformator bzw. das hülsenförmige Teil 14 besteht vorzugsweise aus einem keramischen Werkstoff wie Al₂O₃ mit einer Schallgeschwindigkeit oberhalb 6000 m/sec. Derartige Materialien sind wegen ihrer hohen Resonanzfrequenzen und ihrer Härte besonders gut geeignet, sie werden durch die auftretenden Kavitationserscheinungen nur geringfügig beansprucht.

Im Inneren der Kammer 10 ist ein scheibenförmiges piezokeramisches Element 26 angeordnet. Das Element ist in einer rohrförmigen Konsole 27 so aufgespannt, daß es im Inneren der Flüssigkeit frei schwingen kann. Dazu ist es mit einem flexiblen Kabel (nicht gezeigt) mit einer Elektrode 28 verbunden, die wiederum mit einem Frequenzgenerator 30 elektrisch verbunden ist. Abhängig von der Viskosität des zu schäumenden Brennstoffs können statt des piezokeramischen Elements auch elektromagnetisch angeregte Schwingelemente Verwendung finden.

Frequenzgeneratoren für Ultraschall-Schwinger sind bekannt. Ihr Aufbau ist beispielsweise in der EP-A-0 340 470 und der DE-A-36 25 140 beschrieben. Im vorliegenden Zusammenhang ist lediglich wichtig, daß der Generatorkreis so aufgebaut ist, daß dem schwingenden Element unterschiedliche Frequenzen aufgeprägt werden können. Die Frequenzen hängen von der Geometrie des piezokeramischen Elements ab, von der Viskosität des flüssigen Brennstoffs und schließlich von der gewünschten Selektion der Luftbestandteile - jede der in Luft normalerweise vorhandenen Gaskomponenten hat eine andere optimale Frequenz, bei der sie "gelöst" wird.

An das Gehäuse 10 ist eine Zuführleitung 32 für den flüssigen Brennstoff angeschlossen. Der Brennstoff wird der Kammer 10 unter einem bestimmten Druck zugeführt, wobei der Druck in der Luftzuführleitung 18 um einige Millibar über dem Druck in der Brennstoffleitung 32 liegt.

Das Gehäuse der Kammer 10 besteht vorzugsweise aus einem rostfreien Chrom-Nickelstahl. Das Gehäuse 10 kann in einen mit wärmeableitenden Rippen versehenen Ständer 34 eingesetzt sein.

Die Funktionsweise der beschriebenen Anordnung ist wie folgt.

Die Brennstoffkammer 10 ist mit flüssigem Brennstoff gefüllt, über die Luftleitung 18 wird Luft unter geringfügigem Überdruck durch die Innenbohrung 16 des hülsenförmigen Teils 14 in die Kammer 10 hineingedrückt. Im Inneren der Kammer entsteht eine Art Luftblase 36 mit einer Grenzschicht zwischen Flüssigkeit und Luft.

Bei aktiviertem Ultraschall-Schwinger werden an der Grenzschicht durch eine Art inversen Kapillarwelleneffekt kleinste Luftvolumina in die Flüssigkeit hineingezogen und infolge der Druckdifferenz zwischen dem Ausgang 22 und dem Eingang 32 durch den schraubenlinienförmigen Kanal in der Außenwandung des Amplitudentransformators 14 nach oben in die Austragskammer 20 gefördert. In dem bzw. den schraubenlinienförmigen Kanälen des Amplitudentransformators 14 findet eine weitere Homogenisierung des gebildeten Flüssigkeitsschaums statt, d. h. die eingeschlossenen Luftvolumina werden weiter verkleinert und verteilt.

Bei einem Ausführungsbeispiel wurden in 20 ml flüssigem Brennstoff 2,3 mg Luft "gelöst". Dieser Brennstoffschaum wird von der Austragskammer 20 über die Leitung 22 zu einer Zerstäuberdüse transportiert, in welcher er zerstäubt und verbrannt wird. Infolge des in der Flamme selbst freigesetzten Sauerstoffs steigt der Wirkungsgrad der Verbrennung enorm an, es werden Verbrennungstemperaturen von etwa 2000°C erreicht.

Als Material für das piezokeramische Element hat sich Bleizirkonat-Titanat-Keramik bewährt, andere Keramikmaterialien, wie Barium-Titanat-Keramik sind jedoch ebenfalls geeignet.

Die gezeigte Anordnung des Ultraschall-Schwingers ist lediglich beispielhaft. Möglich ist auch eine Anordnung in der Wand des Gehäuses, falls es sich um besonders niedrigviskose Flüssigkeiten handelt. Gleichfalls ist die Geometrie des Schwingelements von sekundärer Bedeutung, statt der hier gezeigten Scheibe können auch andere Formen Verwendung finden.

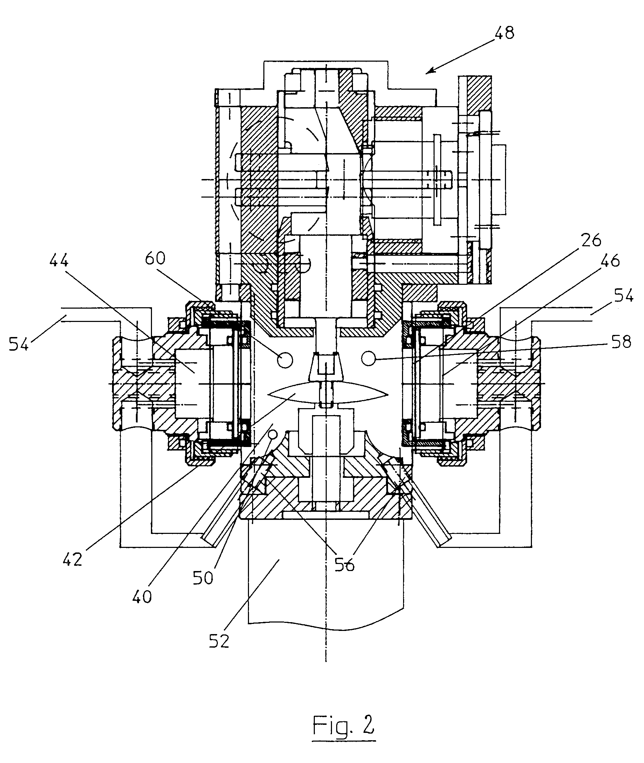

Die in Figur 2 gezeigte Ausführungsform unterscheidet sich von der in Figur 1 gezeigten Ausführung in erster Linie dadurch, daß statt des nachgeschalteten Amplitudentransformators in der Brennstoffkammer 40 ein mechanisches Kavitationselement 42 angeordnet ist. In der Wandung der Brennstoffkammer bzw. des Reaktionsraums sind, einander gegenüberliegend, zwei Ultraschall-Schwinger 44 und 46 vorgesehen. Der Aufbau dieser Schwinger entspricht dem im Zusammenhang mit der Ausführungsform der Figur 1 beschriebenen. Statt der gezeigten Anordnung kann auch eine andere Anordnung der Schwinger gewählt werden, es muß jedoch wenigstens ein Schwinger vorhanden sein.

Oberhalb der Reaktionskammer 40 ist ein Kompressor 48 angeordnet, der Luft verdichtet und unter hohem Druck, beispielsweise 40 bar, durch ein Zeolith-Festbett drückt. In dem Zeolith-Bett, in dem Luftstickstoff absorbiert wird, wird der sauerstoffanteil auf 60 bis 92% gesteigert. Diese sauerstoffangereicherte Luft wird dem Reaktionsraum über eine entsprechend dimensioniertes Kapillarrohr 50 zugeführt. Das Zeolith-Festbett und die Leitungsführung der Luft ist in Figur 2 nicht dargestellt. Die Integration des Kompressors 48 in die Vorrichtung hat den Vorteil, daß die geförderte Luftmenge von vornherein drehzahlabhängig steigt, bzw. sinkt. Der Motor zum Antrieb der Vorrichtung ist mit 52 bezeichnet. Der Motor treibt das mechanische Kavitationselement 42 und die Welle des Kompressors 48.

Der mit Sauerstoff zu beladende Brennstoff wird über die Leitungen 54 eingespeist. Ein Teil des Brennstoffs, vorzugsweise Öl gelangt dabei auf die Rückseite der piezoelektrischen Elemente, deren Wirkungsgrad und Funktion durch die gute elektrische Isoliereigenschaft des eingespeisten Öls verbessert wird. Ein Teil des Öls wird aber auch direkt in die Reaktionskammer 40 eingeführt. Die entsprechenden Stutzen sind mit 56 bezeichnet.

Über ein Kapillarrohr 58 wird Wasser eingespeist, wobei Druck und Durchmesser der Einführrohre so dimensioniert sind, daß der Wasseranteil etwa 30 bis 50 Mol% der Ölmenge beträgt.

Das Kavitationselement 42 weist auf seiner Unter- und seiner Oberseite unterschiedliche Wölbungen auf. Vorzugsweise ist die Oberseite stärker gewölbt als die Unterseite, die ein flacheres Profil aufweisen kann. In dem diskusförmigen Kavitationselement sind mehrere axiale Bohrungen angeordnet, (nicht gezeigt), die eine Flüssigkeitsströmung von der Unterseite des Elements zur Oberseite ermöglichen. Der periphere Rand des Kavitationselements ist messerscharf ausgebildet, um, ähnlich wie beim Flugzeugflügel, eine Umströmung möglichst zu verhindern.

Das Kavitationselement hat nun, wenn es sich mit etwa 3000 bis 8000 Umdrehungen pro Minute dreht, die Wirkung, daß, infolge des Bernoullieffekts, eine Druckdifferenz zwischen Oberseite und Unterseite entsteht, die eine intensive axiale Durchströmung der Bohrungen bewirkt. Die dadurch bewirkte Durchmischung ist so intensiv, daß in kürzester Zeit eine homogene Suspension aus Wasser, Öl und sauerstoffreicher Luft gebildet wird. Diese Suspension wird durch die Wirkung der Ultraschall-Schwinger und die damit in Gang gesetzten sonochemischen Reaktionen weiter homogenisiert und nukleisiert. Der im Reaktionsraum entstehende Ölschaum wird über die Leitung 60 abgezogen und beispielsweise zu einem Brenner oder einer Zerstäuberdüse geführt. Der Wirkungsgrad der Verbrennung ist infolge der hohen Verbrennungstemperaturen sehr gut. Da nahezu keine Stickoxide anfallen, kann beispielsweise bei Kraftfahrzeugen ein Katalysator zur Abgasreinigung entfallen.

## Patentansprüche

1. Anordnung zur Erzeugung eines Brennstoffschaumes aus flüssigem Brennstoff an einer Rohrmündung vorzugsweise mit einer Zerstäuberdüse, die mit unter Druck stehendem Brennstoff beschickt wird, mit einer in der Brennstoffleitung vor der Rohrmündung angeordneten Kammer (10; 40), in der wenigstens ein Schwinger (26; 44, 46) freischwingend angeordnet ist, der in einem bestimmten Frequenzbereich schwingt, und mit einer in die Kammer (10; 40) mündenden Luftleitung (18, 50) zum Einführen von Luft in die Kammer (10; 40) mit einem Druck, der wenigstens dem Druck des flüssigen Brennstoffes entspricht, wobei die Kammer (10; 40) als im Betrieb mit flüssigem Brennstoff füllbare Kammer ausgebildet ist, und wobei der Schwinger (26; 44, 46) in der Kammer (10; 40) so aufgespannt ist, daß er im Inneren des flüssigen Brennstoffes frei schwingen kann.

2. Anordnung nach Anspruch 1, **dadurch gekennzeichnet**, daß der Schwinger ein piezoelektrischer Ultraschall-Schwinger (26) ist.

3. Anordnung nach Anspruch 1 oder 2, **dadurch gekennzeichnet**, daß im Anschluß an die Kammer (10) ein Amplitudentransformator angeordnet ist, der wenigstens einen schraubenlinienförmigen Kanal aufweist, der von einem erzeugten Brennstoff-Luftgemisch durchströmt werden muß.

4. Anordnung nach Anspruch 3, **dadurch gekennzeichnet**, daß der Amplitudentransformator aus einem keramischen Material, vorzugsweise Al₂O₃ besteht.

5. Anordnung nach Anspruch 3 oder 4, **dadurch gekennzeichnet**, daß der Amplitudentransformator aus einem hülsenförmigen Teil (14) besteht, welches dichtend in einen rohrförmigen Gehäuseansatz (12) der Kammer (10) eingesetzt ist, wobei in einem Außenmantel des hülsenförmigen Teils (14) Gewindenuten eingeschnitten sind, die im Zusammenwirken mit der Innenwandung des rohrförmigen Gehäuseansatzes (12) die schraubenlinienförmigen Kanäle zur Förderung des Brennstoff-Luftgemisches bilden und wobei die Luft durch eine Innenbohrung (16) des hülsenförmigen Teils (14) der Kammer (10) zugeführt wird.

6. Anordnung nach Anspruch 5, **dadurch gekennzeichnet**, daß die schraubenförmigen Kanäle in eine Austragskammer (20) am stromabseitigen Ende des rohrförmigen Gehäuseansatzes (12) münden, von welcher das Brennstoff-Luftgemisch der Zerstäuberdüse zugeführt wird.

7. Anordnung nach Anspruch 6, **dadurch gekennzeichnet**, daß die Luftleitung (18) die Austragskammer (20) dichtend durchsetzt und in die Innenbohrung (16) des hülsenförmigen Teils (14) mündet.

8. Anordnung nach einem der Ansprüche 5 bis 7, **dadurch gekennzeichnet**, daß der Ultraschall-Schwinger (26) im Inneren der Kammer (10) angeordnet ist und daß der rohrförmige Gehäuseansatz (12) dem Ultraschall-Schwinger (26) gegenüberliegend in die Kammer (10) mündet.

9. Anordnung nach einem der Ansprüche 1 bis 8, **dadurch gekennzeichnet**, daß der Ultraschall-Schwinger (26) eine Scheibe aus einem piezokeramischen Material ist, die mittels einer rohrförmigen Konsole etwa mittig in der Kammer (10) angeordnet ist.

10. Anordnung nach Anspruch 9, **dadurch gekennzeichnet**, daß der Ultraschall-Schwinger (26) mit einem außerhalb der Kammer (10) angeordneten Frequenzgenerator (30) verbunden ist.

11. Anordnung nach einem der Ansprüche 1 bis 10, **dadurch gekennzeichnet**, daß der Ultraschall-Schwinger (26) aus Bleizirkonat-Titanat-Keramik besteht.

12. Anordnung nach Anspruch 1 oder 2, **dadurch gekennzeichnet**, daß in der Kammer (40) ein schnell rotierendes Kavitationselement (42) angeordnet ist.

13. Anordnung nach Anspruch 12, dadurch gekennzeichnet, daß das Kavitationselement (42) eine diskusförmige Scheibe mit unterschiedlichen Wölbungen und axialen Bohrungen ist.

14. Anordnung nach Anspruch 12 oder 13, **dadurch gekennzeichnet**, daß von einer Welle des Kavitationselements (42) auch ein Kompressor (48) angetrieben wird, der die in die Kammer (40) einzuspeisende Luft verdichtet.

15. Anordnung nach einem der Ansprüche 12 bis 14, **dadurch gekennzeichnet**, daß in einer Wandung der Kammer (40) wenigstens zwei sich diametral gegenüberliegende Schwinger (44, 46) angeordnet sind.

16. Anordnung nach Anspruch 15, **dadurch gekennzeichnet,** daß ein Teil des in die Kammer (40) eingeleiteten Brennstoffs, vorzugsweise Öl, an einer Rückseite der scheibenförmigen Schwinger (44, 46) eingeführt wird.

17. Anordnung nach einem der Ansprüche 12 bis 14, **dadurch gekennzeichnet**, daß ein wasserführendes Kapillarrohr (58) in die Kammer (40) mündet, wobei der Durchmesser des Kapillarrohres (58) so bemessen ist, daß der Wasseranteil in der Kammer (40) zwischen 30 und 50 Mol%, bezogen auf die Menge des flüssigen Brennstoffs, beträgt.

18. Verfahren zur Erzeugung eines Brennstoffschaumes aus flüssigem Brennstoff, mit zumindest einem in einer Kammer angeordneten Schwinger (26; 44, 26), vorzugsweise Ultraschall-Schwinger, wobei der flüssige Brennstoff den Schwinger allseitig umgibt und Luft in die Kammer (10; 40) mit wenigstens dem Druck des flüssigen Brennstoffs eingeleitet und so mit dem Brennstoff in Schwingung versetzt wird, daß dieser mit Luft angereichert und ein schaumartiges Brennstoff-Luftgemisch erzeugt wird.

19. Verfahren nach Anspruch 18, **dadurch gekennzeichnet**, daß in der mit Brennstoff gefüllten Kammer (10; 40) eine Grenzfläche zwischen der eingepreßten Luft und dem flüssigen Brennstoff gebildet wird.

20. Verfahren nach Anspruch 18 oder 19, **dadurch gekennzeichnet**, daß das Brennstoff-Luftgemisch durch einen vorzugsweise schraubenlinienförmigen Kanal eines Amplitudentransformators gepreßt wird, der in Resonanz zum Ultraschallschwinger (26; 44, 46) mitschwingt.

21. Verfahren nach einem der Ansprüche 18 bis 20, **dadurch gekennzeichnet**, daß der Brennstoff mit sauerstoffangereicherter Luft beladen wird.

22. Verfahren nach Anspruch 21, **dadurch gekennzeichnet**, daß der sauerstoffanteil der Luft zwischen 60 und 92 % liegt.

23. Verfahren nach einem der Ansprüche 18 bis 22, **dadurch gekennzeichnet**, daß in die Kammer (10; 40) zusätzlich Wasser eingeführt wird.

24. Verfahren nach Anspruch 23, **dadurch gekennzeichnet**, daß der wasseranteil zwischen 30 und 50 Mol% , bezogen auf die Menge des flüssigen Brennstoffs, beträgt.

25. Verfahren nach einem der Ansprüche 18 bis 24, **dadurch gekennzeichnet**, daß zusätzlich zu einer durch den Ultraschall-Schwinger (26; 44, 46) hervorgerufenen sonochemischen Reaktion in der Kammer (10; 40) eine Homogenisierung der Mischungskomponenten durch ein schnell rotierendes Kavitationselement (42) erfolgt.

## Claims

1. An arrangement for the production of a fuel foam from liquid fuel at a pipe outlet, preferably with an atomizer nozzle charged with pressurized fuel, with a chamber (10; 40) being disposed in the fuel conduit before the pipe outlet and having freely oscillating therein at least one oscillator (26; 44, 46) oscillating in a certain frequency range, and with an air conduit (18, 50) opening into said chamber (10; 40) and serving to introduce air into the chamber (10; 40) with a pressure corresponding at least to the pressure of the liquid fuel, wherein said chamber (10; 40) is designed as a chamber fillable with liquid fuel when in operation and wherein said oscillator (26; 44, 46) is mounted within said chamber (10, 40) so as to freely oscillate in the midst of the liquid fuel.

2. The arrangement according to claim 1, **characterized in that** the oscillator is a piezoelectric ultrasonic oscillator (26).

3. The arrangement according to claim 1 or 2, **characterized in that** an amplitude transformer having at least one helical channel is connected after the chamber (10), and a fuel-air mixture having been produced must flow through said channel.

4. The arrangement according to claim 3, **characterized in that** the amplitude transformer consists of a ceramic material, preferably Al₂O₃.

5. The arrangement according to claim 3 or 4, **characterized in that** the amplitude transformer comprises a sleeve-like part (14) sealingly set into a pipe-shaped neck (12) of the chamber (10), with thread grooves being cut in an outer casing of said sleeve-like part (14), with said thread grooves, in cooperation with the inner wall of said pipe-shaped housing neck (12), forming the helical channels for conveying the fuel-air mixture, and with the air being fed to the chamber (10) through a inner bore (16) of the sleeve-like part (14).

6. The arrangement according to claim 5, **characterized in that** the helical channels open into a delivery chamber (20) at the downstream end of the pipe-shaped housing neck (12), with the air-fuel mixture being fed therefrom to the atomizer nozzle.

7. The arrangement according to claim 6, **characterized in that** the air conduit (18) sealingly passes through the delivery chamber (20) and opens into the inner bore (16) of the sleeve-like part (14).

8. The arrangement according to any of claims 5 to 7, **characterized in that** the ultrasonic oscillator (26) is disposed in the interior of the chamber (10) and that the pipe-shaped housing neck (12) opposite said oscillator (26) opens into the chamber (10).

9. The arrangement according to any of claims 1 to 8, **characterized in that** the ultrasonic oscillator (26) is a disc of a piezoceramic material disposed approximately centrically in the chamber (10) by means of a pipe-shaped pedestal.

10. The arrangement according to claim 9, **characterized in that** the ultrasonic oscillator (26) is connected to a frequency generator (30) disposed outside of the chamber (10).

11. An arrangement according to any of claims 1 to 10, **characterized in that** the ultrasonic oscillator (26) consists of lead zirconate titanate ceramics.

12. The arrangement according to claim 1 or 2, **characterized in that** a rapidly rotating cavitation element (42) is disposed in the chamber (40).

13. The arrangement according to claim 12, **characterized in that** the cavitation element (42) is a discus-shaped disc with different curvatures and with axial bores.

14. The arrangement according to claim 12 or 13, **characterized in that** a compressor (48) compressing the air to be fed into the chamber (40) is also driven by a shaft of the cavitation element (42).

15. The arrangement according to any of claims 12 to 14, **characterized in that** at least two diametrically opposed oscillators (44, 46) are disposed in a wall of the chamber (40).

16. The arrangement according to claim 15, **characterized in that** a portion of the fuel, preferably oil, conducted into the chamber (40) is introduced at a rear side of the disc-shaped ultrasonic oscillator (44, 46).

17. The arrangement according to any of claims 12 to 14, **characterized in that** a water-conducting capillary tube (58) opens into the chamber (40), with the diameter of the capillary tube (58) being dimensioned such that the proportion of water in the chamber (40) amounts to between 30 and 50 mol% related to the quantity of liquid fuel.

18. A process of production of a fuel foam from liquid fuel, with at least one oscillator (26; 44, 46), preferably an ultrasonic oscillator, being disposed in a chamber, **wherein** the liquid fuel encompasses the oscillator on all sides and air is conducted into the chamber (10; 40) with at least the pressure of the liquid fuel and is caused to oscillate with the fuel such that the fuel is enriched with air and a foam-like fuel-air mixture is produced.

19. The process according to claim 18, **characterized in that** in the chamber (10; 40) filled with fuel an interface is formed between the air pressed in and the liquid fuel.

20. The process according to claim 18 or 19, **characterized in that** the air-fuel mixture is pressed through a preferably helical channel of an amplitude transformer resonating together with the ultrasonic oscillator (26; 44, 46).

21. The process according to any of claims 18 to 20, **characterized in that** the fuel is loaded with oxygen-enriched air.

22. The process according to claim 21, **characterized in that** the proportion of oxygen in the air lies between 60 and 92 %.

23. The process according to at least one of the preceding claims, **characterized in that** additional water is introduced into the chamber (10; 40).

24. The process according to claim 23, **characterized in that** the proportion of water amounts to between 30 and 50 mol %, related to the quantity of liquid fuel.

25. The process according to any of claims 18 to 24, **characterized in that** in addition to the sonochemical reaction in the chamber (10, 40), brought about by the ultrasonic oscillator (26; 44, 46), a homogenization of the mixing components by a rapidly rotating cavatation element (42) takes place.

## Revendications

1. Dispositif pour réaliser à partir d'un carburant liquide une mousse de carburant fournie par une ouverture de tube, de préférence munie d'une buse de pulvérisation, qui est alimentée en carburant sous pression, comprenant une chambre (10 ; 40) disposée dans le conduit de carburant en mont de l'ouverture de tube, dans laquelle est monté au moins un transducteur (26 ; 44, 46) pouvant osciller librement, qui oscille dans une plage de fréquence prédéterminée, et un conduit d'air (18, 50) débouchant dans la chambre (10 ; 40) pour alimenter la chambre (10 ; 40 en air sous une pression correspondant au moins à la pression du carburant liquide, la chambre (10 ; 40) étant une chambre susceptible d'être remplie de carburant liquide pendant l'utilisation, et le transducteur (26 ; 44, 46) étant monté dans la chambre (10 ; 40) de manière à pouvoir osciller librement à l'intérieur du carburant liquide.

2. Dispositif selon la revendication 1, caractérisé en ce que le transducteur est un transducteur piézoélectrique à ultrasons (26).

3. Dispositif selon la revendication 1 ou 2, caractérisé en ce qu'un transformateur d'amplitude est disposé dans le prolongement de la chambre (10), ce transformateur d'amplitude comportant au moins un canal hélicoïdal qui doit être parcouru par un mélange carburant-air préétabli.

4. Dispositif selon la revendication 3, caractérisé en ce que le transformateur d' amplitude est en un matériau céramique, de préférence Al₂O₃.

5. Dispositif selon la revendication 3 ou 4, caractérisé en ce que le transformateur d' amplitude est constitué d'une partie (14) en forme de manchon qui est disposée de manière étanche dans une extension tubulaire (12) de la chambre (10), des filetages étant réalisés dans une enveloppe externe de la partie en forme de manchon (14), qui forment avec la paroi interne de l'extension tubulaire (12) des canaux hélicoïdaux pour transporter le mélange carburant-air, l' air étant amené dans la partie en forme de manchon (14) de la chambre (10) par un perçage interne (16).

6. Dispositif selon la revendication 5, caractérisé en ce que les canaux hélicoïdaux débouchent dans une chambre de sortie (20) du côté aval de l'extension tubulaire (12), à partir de laquelle le mélange carburant-air parvient à la buse de pulvérisation.

7. Dispositif selon la revendication 6, caractérisé en ce que le conduit d'air (18) traverse la chambre de sortie (20) de manière étanche et débouche dans le perçage interne (16) de la partie en forme de manchon (14).

8. Dispositif selon l'une quelconque des revendications 5 à 7, caractérisé en ce que le transducteur à ultrasons (26) est disposé à l'intérieur de la chambre (10) et en ce que l'extension tubulaire (12) débouche dans la chambre (10) en face du transducteur à ultrasons (26).

9. Dispositif selon l'une quelconque des revendications 1 à 8, caractérisé en ce que le transducteur à ultrasons (26) est un disque en un matériau piézocéramique qui est maintenu sensiblement au centre de la chambre (10) à l'aide d'une console tubulaire.

10. Dispositif selon la revendication 9, caractérisé en ce que le transducteur à ultrasons (26) est relié à un générateur de fréquence (30) disposé à l'extérieur de la chambre (10).

11. Dispositif selon l'une quelconque des revendications 1 à 10, caractérisé en ce que le transducteur à ultrasons (26) est en céramique de titanate-zirconate de plomb.

12. Dispositif selon la revendication 1 ou 2, caractérisé en ce qu'un élément de cavitation à rotation rapide (42) est disposé dans la chambre (40).

13. Dispositif selon la revendication 12, caractérisé en ce que l'élément de cavitation (42) est un plateau discoïde à différentes courbures et à perçages axiaux.

14. Dispositif selon la revendication 12 ou 13, caractérisé en ce qu'un axe de l'élément de cavitation (42) entraïne un compresseur (48) qui comprime l'air alimentant la chambre (40).

15. Dispositif selon l'une quelconque des revendications 12 à 14, caractérisé en ce qu'au moins deux transducteurs (44, 46) diamétralement opposés sont disposés au niveau de la paroi de la chambre (40).

16. Dispositif selon la revendication 15, caractérisé en ce qu'une partie du carburant alimentant la chambre (40), de préférence de l'huile, pénètre à l'arriére des transducteurs qui sont en forme de disque (44, 46).

17. Dispositif selon l'une quelconque des revendications 12 à 14, caractérisé en ce qu'un tube capillaire (58) amenant de l'eau débouche dans la chambre (40), le diamètre du tube capillaire (58) étant tel que la proportion d'eau dans la chambre (40) est comprise entre 30 et 50 % en moles par rapport au carburant liquide.

18. Procédé pour réaliser une mousse de carburant à partir d'un carburant liquide, utilisant au moins un transducteur (26 ; 44, 46), de préférence un transducteur à ultrasons, disposé dans une chambre, le carburant liquide entourant le transducteur de tous côtés, procédé dans lequel de l'air est amené dans la chambre (10 ; 40) avec une pression au moins égale à celle du carburant liquide et étant déplacé en oscillation avec le carburant de manière que ce dernier s'enrichit en air pour former un mélange carburant-air sous forme de mousse.

19. Procédé selon la revendication 18, caractérisé en ce qu'une surface frontière est formée dans la chambre (10 ; 40) remplie de carburant entre l'air entrant sous pression et le carburant liquide.

20. Procédé selon la revendication 18 ou 19, caractérisé en ce que le mélange carburant-air est forcé à passer dans un canal de préférence hélicoïdal d'un transformateur d'amplitude qui oscille en résonance avec le transducteur à ultraSons (26 ; 44, 46).

21. Procédé selon l'une quelconque des revendications 18 à 20, caractérisé en ce que le carburant est chargé en air enrichi en oxygène.

22. Procédé selon la revendication 21, caractérisé en ce que la proportion d'oxygène de l'air est comprise entre 60 et 92 %.

23. Procédé selon l'une quelconque des revendications 18 à 22, caractérisé en ce que la chambre (10 ; 40) est en outre alimentée en eau.

24. Procédé selon la revendication 23, caractérisé en ce que la proportion d'eau est comprise entre 30 et 50 % en moles par rapport à la quantité de carburant liquide.

25. Procédé selon l'une quelconque des revendications 18 à 24, caractérisé en ce que, outre la provocation d'une réaction sonochimique dans la chambre (10 ; 40) par le transducteur à ultrasons (26 ; 44, 46), il se produit une homogénéisation des composants du mélange grâce à un élément de cavitation (42) à rotation rapide.
